# EUROPEAN PATENT APPLICATION

(11) **EP 2 644 573 A1**
(43) Date of publication of application: **02.10.2013**
(21) Application number: 12002257.9
(22) Date of filing: 29.03.2012
(51) Int. Cl.: C02F 1/463

(54) **Electrocoagulation apparatus**

(71) Applicant: Bergant, Joze, 1217 Vodice (SI)
(72) Inventor: Bertoncelj, Sandi, 4270 Jesenice (SI); Dragos, Ana, 4290 Trzic (SI)
(74) Representative: Borstar, Dusan

(57) **Abstract**

Electrocoagulation apparatus comprises a housing (17), which consists of electric insulating and chemically inert material and is furnished with an inlet aperture (19) and an outlet aperture (18) and is adapted to receive a liquid which is intended to be purified by means of electrocoagulation when passing throughout said housing (17). Said apparatus further comprises at least two electrodes (1, 2), which are located within said housing (17) in the area of contact with the aforementioned liquid and extend parallel to each other and are appropriately spaced apart from each other, so that at least one metallic intermediate plate (3) is placed between said electrodes (1, 2) and insulated with respect to them, wherein at least one of said electric electrodes (1, 2) is electrically interconnected with the first electric connector of a direct (DC) electric voltage source (11), while at least one residual electrode (1, 2) is electrically interconnected with the second electric connector thereof. In order to simplify manufacturing and maintenance of such apparatus, and to improve efficiency of electrocoagulation, each disposable electrodes (1, 2) and intermediate plates (3) are arranged within the housing (17) coaxially and rotatably around their common geometric axis (100).

## Description

The invention belongs to chemistry, namely to treatment of water, waste water or sewage by means of electrocoagulation.

Electrocoagulation as such is known in the field of treatment of sewage and is useful in purification of waste water in the field of treatment and machining of metals, in paper and cellulose industry, painting industry and by removing fats, organic substances, phosphorus as well as in several other fields.

An apparatus for purification of sewage by means of electrocoagulation is described in US 2011/0290667 A1. Such apparatus, a so-called electrocoagulation reactor, comprises a housing, which is furnished with an inlet aperture and an outlet aperture, and two electrodes are arranged within said housing, which are spaced apart from each other and are each per se connected to a direct voltage (DC) source. At least one intermediate plate, which is not connected to said voltage source and consists of segments, which are arranged within a single plane, is inserted between said electrodes, namely between a positive electrode i.e. anode and a negative electrode i.e. cathode. The intermediate plate extends parallel with respect to said electrodes and is spaced apart from each electrode. Said plate consists of electric conductive material like aluminium or mild steel. The inlet aperture is usually arranged at lower position than the outlet aperture. As soon as both cathode and anode are connected to the voltage source and the waste water intended for treatment is fed into said housing through the inlet opening, electric current occurs between said electrodes, which are submerged into said waste water. Electrolytic oxidation of the anode in the context of the coagulation process as such results in formation of coagulation products, namely metallic ions. On the one hand, manufacturing and maintenance incl. cleaning of such known apparatus having fixed electrodes and at least one intermediate plate between them is relatively complicated, while on the other hand it is also difficult to assure sufficiently intensive and permanent circulation of each treated waste water in the area between the electrodes in order to efficiently expose relevant ingredients of the waste water to each electric voltage on the electrodes, so that the overall efficiency of such apparatus is pretty low.

The purpose of the invention is to simplify the manufacturing and maintenance of such apparatus, and simultaneously also to improve the overall efficiency of electrocoagulation performed by such apparatus.

Invention refers to an electrocoagulation apparatus, which comprises a housing, which consists of electric insulating and chemically inert material and is furnished with an inlet aperture and an outlet aperture and is adapted to receive a liquid which is intended to be purified by means of electrocoagulation when passing throughout said housing, said apparatus further comprising at least two electrodes, which are located within said housing in the area of contact with the aforementioned liquid and extend parallel to each other and are appropriately spaced apart from each other, so that at least one metallic intermediate plate is placed between said electrodes and is spaced apart of them and electrically insulated with respect to them, wherein at least one of said electric electrodes is electrically interconnected with the first electric connector of a direct electric voltage source, while at least one residual electrode is electrically interconnected with the second electric connector thereof.

In accordance with the invention, each disposable electrodes and intermediate plates are arranged within the housing coaxially and rotatably around their common geometric axis.

One of the embodiments of the invention provides that the electrodes and each intermediate plate(s) arranged therebetween are mounted onto a shaft consisting of electric insulating material, and are spaced from each other by means of electric insulating spacers and attached onto the shaft by means of a nut, wherein said shaft is driven by means of a motor, which is located outside of said housing. Said motor is preferably an electric motor, and between it and the shaft a transmission gear can be foreseen.

Moreover, said shaft is preferably a hollow shaft, and is furnished with electrically conductive contact rings, which are arranged outside of the housing and are on the one hand via separate electric conductors extending throughout the shaft each per se electrically interconnected with each belonging electrode, and on the other hand via corresponding contact brushes and electric conductors electrically interconnected with each belonging connectors on the direct electric voltage source.

Still further, said electrodes and each disposable intermediate plates are available in the form of circular plates having a corresponding diameter and a corresponding thickness and are spaced at a corresponding distance apart from each other in a direction along their common geometric and rotational axis, wherein said diameter, each thickness and distance as well the electric current and voltage in each desired direct voltage source are determined in advance on the basis of each expected or required electric current density on the surface of electrodes, and on the basis of each expected substance i.e. liquid intended to be treated by means of such electrocoagulation apparatus.

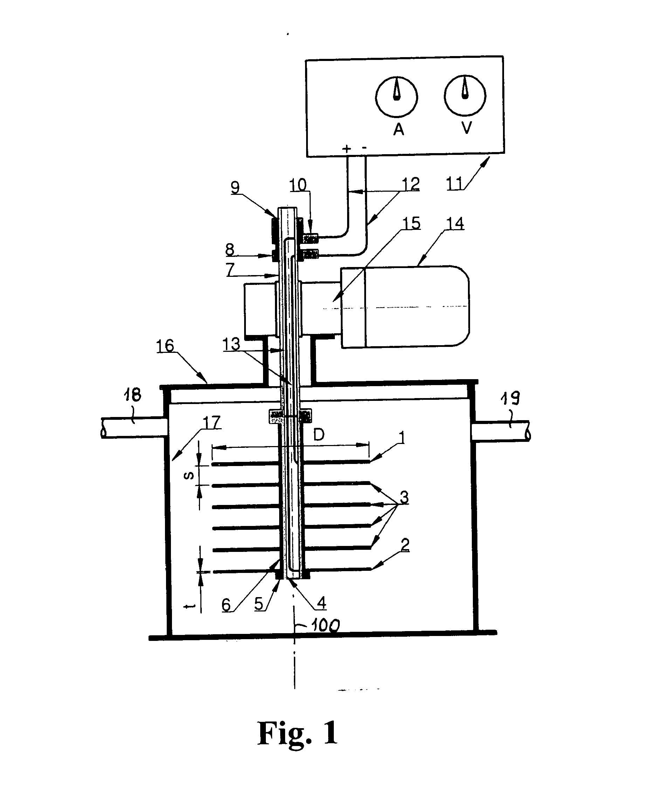

Invention will be described in more detail on the basis of an embodiment of an electrocoagulation apparatus, which is schematically presented in Fig. 1.

Electrocoagulation apparatus comprises a housing 17 which is furnished with an inlet aperture 19, an outlet aperture 18 and in this particular embodiment also with a cover 16. Said housing 17 consists of electric insulating and with respect to sewage chemically inert material, and two electrodes 1, 2 are arranged in its interior, which are electrically connected with a direct voltage electricity source 11, which is located outside of said housing 17 and the first connector of which is interconnected with the negative electrode i.e. cathode 1, whilst its second connector is interconnected with the positive electrode i.e. anode 2. Said cathode 1 and anode 2 extend parallel to each other, and between them at least one intermediate plate 3 is inserted, which is correspondingly spaced apart from each of them and consists of electric conductive material, e.g. aluminium or steel, and is functioning as a bipolar electrode. Thickness *t* of each electrode 1, 2 and distance *s* between each electrode 1, 2 and said intermediate plate 3, or between each two neighboring intermediate plates 3, are determined with respect to each anticipated consistence and quantity of waste water and also with respect to each preferred characteristics of the electrocoagulation process as such, wherein each desired substances shall be removed from water, and correspondingly, electric current and voltage generated by said source 11 are also determined in advance on the basis of each expected electric current density in the area of said electrodes 1, 2 and intermediate plates 3.

In accordance with the invention, said electrodes 1, 2 together with each corresponding intermediate plates 3 arranged therebetween are attached on a rotatable shaft 7, namely on that end portion 4 of said rotatable shaft 7, which is located within said housing 17. In the shown embodiment, two circular electrodes 1, 2 and several intermediate plates 3 are foreseen, where a diameter thereof is marked as D. The shaft 7 consists of electrically insulating material like e.g. plastics, and is in this particular case a hollow shaft, on which between both electrodes 1, 2 several intermediate plates 3 are placed, which are on the shaft 7 separated from each other by means of spacers 6 consisting of electric insulating material. Said plates 3 are together with said spacers 6 held in their position by means of a nut 5. The shaft 7 is able to rotate around its longitudinal geometric axis 100 and is driven by means of a motor 14, in this particular embodiment by means of an electric motor, and optionally also via appropriate transmission gears 15. Moreover, said shaft 7 is furnished with two contact rings 8, 9, which are located outside of said housing 17 and are correspondingly spaced from each other, and each of them is on the one hand via corresponding electric conductor 13 electrically interconnected with each belonging electrode 1, 2, and on the other hand via each corresponding contact brush 10 and each corresponding electric conductor 12 electrically interconnecting with each corresponding contact of the electric voltage source 11. In this, said contact rings 8, 9 consist of electrically conductive alloy on the basis of copper, e.g. of bronze, while said contact brushes 10 are preferably made of carbon or graphite.

During operation, the housing 17 is filled with waste water intended for treatment by means of electrocoagulation, and the shaft 7 is rotated around its longitudinal geometric axis 100 together with electrodes 1, 2 and intermediate plates 3 mounted thereon, and is driven by the motor 14 and when desired also via the transmission gears 15. When the electrodes 1, 2 are via electric conductors 13, contact rings 8, 9, contact brushes 10 and electric conductors 12 interconnected with the direct (DC) voltage source 11, electrocoagulation process takes place within the housing 17. Thanks to rotation of electrodes 1, 2 and intermediate plates 3 mounted on the same shaft 7 relative to the housing 17, the circulation of water between each electrode 1, 2 and intermediate plate 3 becomes intensive, which results in efficient removing of sludge, oxides and coagulation products from the surfaces of electrodes 1, 2 and plates 3, which are then much more exposed to efficiency of the electric current, so that the electrocoagulation process as such is much more efficient than in previously known apparatuses with static electrodes 1, 2 and plates 3.

## Claims

1. Electrocoagulation apparatus, comprising a housing (17), which consists of electric insulating and chemically inert material and is furnished with an inlet aperture (19) and an outlet aperture (18) and is adapted to receive a liquid which is intended to be purified by means of electrocoagulation when passing throughout said housing (17), said apparatus further comprising at least two electrodes (1, 2), which are located within said housing (17) in the area of contact with the aforementioned liquid and extend parallel to each other and are appropriately spaced apart from each other, so that at least one metallic intermediate plate (3) is placed between said electrodes (1, 2) and is spaced apart of them and electrically insulated with respect to them, wherein at least one of said electric electrodes (1, 2) is electrically interconnected with the first electric connector of a direct (DC) electric voltage source (11), while at least one residual electrode (1, 2) is electrically interconnected with the second electric connector thereof, **characterized in that** each disposable electrodes (1, 2) and intermediate plates (3) are arranged within the housing (17) coaxially and rotatably around their common geometric axis (100).

2. Apparatus according to Claim 1, **characterized in that** the electrodes (1, 2) and each intermediate plate(s) (3) arranged therebetween are mounted onto a shaft (17) consisting of electric insulating material, and are spaced from each other by means of electric insulating spacers (6) and attached onto the shaft (7) by means of a nut (5), wherein said shaft (7) is driven by means of a motor (14), which is located outside of said housing (17).

3. Apparatus according to Claim 2, **characterized in that** the motor (14) is an electric motor and **in that** between it and the shaft (17) a transmission gear (15) is foreseen.

4. Apparatus according to anyone of Claims 1 - 3, **characterized in that** the shaft (7) is a hollow shaft.

5. Apparatus according to anyone of Claims 1 - 4, **characterized in that** the shaft (7) is furnished with electrically conductive contact rings (8, 9), which are arranged outside of the housing (17) and are on the one hand via separate electric conductors (13) extending throughout the shaft (17) each per se electrically interconnected with each belonging electrode (1, 2), and on the other hand via corresponding contact brushes (10) and electric conductors (12) electrically interconnected with each belonging connectors on the direct (DC) electric voltage source (11).

6. Apparatus according to anyone of the preceding Claims, **characterized in that** the electrodes (1, 2) and each disposable intermediate plates (3) are available in the form of circular plates having a diameter (***D***) and thickness (***t***) and are spaced at distance (***s***) apart from each other in a direction along their common geometric and rotational axis (100), wherein said diameter (***D***), the thickness (***t***), said distance (***s***) as well as the electric current and voltage in each desired direct (DC) voltage source (11) are determined in advance on the basis of each expected or required electric current density on the surface of electrodes (1, 2), and on the basis of each expected substance i.e. liquid intended to be treated by means of such electrocoagulation apparatus.
